(19) Europäisches Patentamt
European Patent Office
Office européen des brevets

(11) Publication number: **0 449 181 A2**

(12) **EUROPEAN PATENT APPLICATION**

(21) Application number: **91104689.4**

(51) Int. Cl.$^5$: **C08L 83/07**, C08K 9/10

(22) Date of filing: **25.03.91**

(30) Priority: **26.03.90 JP 76459/90**

(43) Date of publication of application:
**02.10.91 Bulletin 91/40**

(84) Designated Contracting States:
**BE DE FR GB**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Togashi, Atsushi**
**6,1-chome, Yushudai Nishi**
**Ichihara-shi, Chiba Prefecture(JP)**
Inventor: **Kasuya, Akira**
**6,1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **One-part curable organosiloxane composition.**

(57) The adhesion of cured elastomers and resins prepared using organosiloxane compositions that cure by a platinum-catalyzed hydrosilylation reaction is substantially increased without the necessity of adding adhesion promoters as taught in the prior art when the organohydrogenpolysiloxanes contains at least one silicon-bonded alkoxysilylalkyl group per molecule.

EP 0 449 181 A2

The present invention relates to curable organosiloxane compositions that cure by a hydrosilylation reaction. More particularly, the present invention relates to one-part curable organosiloxane compositions characterized by an excellent storage stability in the vicinity of room temperature, by rapid curing upon heating, and by the excellent adhesion exhibited by cured materials prepared from these compositions without the necessity of including additional adhesion promoters in the curable composition.

Organopolysiloxane compositions which cure by a hydrosilylation reaction catalyzed by metals from the platinum group of the periodic table of the elements and compounds of these metals are characterized by a rapid cure rate in deep sections without the generation of reaction by-products. Compositions of this type are useful in a wide range of applications including, for example, adhesives, potting and coating materials for electrical and electronic components, and release coatings for paper and films.

Two disadvantages of this type of organosiloxane composition are its relatively poor storage stability under ambient conditions, even in the presence of conventional platinum catalyst inhibitors, and the poor adhesion to both organic and inorganic substrates of cured resins and elastomers prepared by curing this type of composition. For example, when used as a potting or coating material for electrical or electronic components, the cured material undergoes exfoliation or delamination rather easily, resulting in the infiltration of moisture or a decline in adhesive strength.

It is known to add certain organosilicon compounds to these curable compositions, to achieve cohesive bonding between the cured material and an organic or inorganic substrate.

The use of partial hydrolysis products of aliphatically unsaturated alkoxysilanes such as vinyltrialkoxysilanes, as adhesion promoters for compositions comprising a vinyl terminated polyorganosiloxane, an organohydrogensiloxane crosslinking agent and a platinum catalyst is taught in U.S. Patent No. 4,311,739, which issued to Hardman and Dujak on January 19, 1982.

Imparting adhesion to polyorganosiloxane compositions that are curable to silicone elastomers using a platinum-catalyzed hydrosilation reaction by incorporating certain silicon-bonded reactive groups such as ester, epoxy or trialkoxysilylalkyl group into the ethylenically unsaturated polyorganosiloxane reactant is described in U.S. Patent No. 4,245,079, which issued to Matsumoto and Murai on January 13, 1981. When the reactive group is trialkoxysilylalkyl, the ethylenically unsaturated polyorganosiloxane reactant exhibits repeating units of the general formula $-OSi(CH_3)[RSi(OR')_3]$, where R is alkylene such as ethylene and R' is alkyl.

United States Patent No. 4,087,585, which issued to Schulz on May 2, 1978 discloses adhesion promoters consisting essentially of the combination of 1) a polysiloxane containing at least one silicon-bonded vinyl radical and at least one silicon-bonded hydroxyl group and 2) an epoxy-containing alkoxysilane.

An objective of the present invention is to improve the adhesion to both organic and inorganic substrates exhibited by cured materials prepared from storage-stable one-part organosiloxane compositions containing as the hydrosilylation catalyst a microencapsulated metal from the platinum group of the periodic table or a compound of such a metal.

The present inventors and others have taught the use of platinum-containing hydrosilylation catalysts in curable organosiloxane compositions as a means to impart long-term storage stability to these compositions.

The present inventors have now discovered that the adhesion of cured elastomers and resins prepared using these compositions can be substantially increased without the necessity of adding adhesion promoters as taught in the prior art. This has been achieved through the use of organohydrogenpolysiloxanes containing silicon-bonded alkoxysilylalkyl groups.

The present invention relates to an improved single-package heat curable organopolysiloxane composition comprising

(A) an organopolysiloxane containing at least 2 silicon-bonded alkenyl radicals per molecule and which is represented by the average formula

$$R^1{}_aSiO_{(4-a)/2}$$

wherein $R^1$ represents a substituted or unsubstituted monovalent hydrocarbon radical and the value of $\underline{a}$ is from 1.0 to 2.3, inclusive;

(B) an organohydrogenpolysiloxane containing at least 2 silicon-bonded hydrogen atoms per molecule; and

(C) a microencapsulated hydrosilylation-reaction catalyst where said catalyst is selected from the group consisting of metals from the platinum group of the periodic table of the elements and compounds of said metals, and said catalyst is microencapsulated within a layer of thermoplastic resin exhibiting a

softening point of from 50 to 200° C.

The improvement that characterizes the present compositions resides in the presence in said organohydrogenpolysiloxane of at least one repeating unit per molecule corresponding to the formula

$$\begin{array}{c} R^2 \\ | \\ -SiO- \\ | \\ R^4SiOR3 \end{array}$$

where $R^2$ is selected from the same group of hydrocarbon radicals as $R^1$, $R^3$ represents an alkyl radical and $R^4$ represents an alkenyl radical containing at least two carbon atoms.

In preferred embodiments of the present organohydrogenpolysiloxane $R^4$ represents an ethylene radical.

The present compositions differ from those of the aforementioned patent to Matsumoto et al. with respect to the location of the alkoxysilylalkyl group, represented by $R^4$SiOR3 in the forgoing formula for the organohydrogenpolysiloxane. In accordance with the teaching of Matsumoto et al. a cyclic organohydrogensiloxane containing alkoxysilylalkyl groups on at least one of the silicon atoms is reacted with an organopolysiloxane containing at least one non-terminal silicon atom containing an alkenyl group as a substituent. The resultant reaction product is used as one embodiment of the alkenyl-substituted polyorganosiloxane that is reacted with an organohydrogenpolysiloxane in the presence of a hydrosilylation catalsyt to form cured materials.

In accordance with the present invention, the cyclic alkoxysilylalkyl substituted organohydrogensiloxane, used as an intermediate reactant by Matsumoto et al., is used as ingredient B of the curable composition. The present invention therefore eliminates the necessity of reacting this ingredient to form the alkenyl-substituted organopolysiloxane, which is then must be blended with another organohydrogenpolysiloxane to prepare a curable composition.

The organopolysiloxane identified hereinafter as ingredient A is the principal or base ingredient of the present compositions. This ingredient must contain at least 2 silicon-bonded alkenyl radicals in each molecule. The group represented by $R^1$ in the general formula for this ingredient is a monovalent hydrocarbon radical that includes but is not limited to alkyl radicals such as methyl, ethyl, propyl, butyl, hexyl, and octyl; alkenyl radicals groups such as vinyl, allyl, and hexenyl; aryl radicals such as phenyl; and substituted hydrocarbon radicals, particularly halogenated alkyl radicals such as 3,3,3-trifluoropropyl.

The subscript a in the general formula should have a value of from 1.0 to 2.3.

The molecular configuration ingredient A can be linear or branched. While its degree of polymerization is not specifically restricted, organopolysiloxanes with viscosities in the range of 10 to 1,000,000 centipoise at 25° C. will generally be used.

Ingredient B, an organohydrogenpolysiloxane, constitutes the unique and characterizing feature of the present curable compositions. In addition to containing at least two silicon-bonded hydrogen atoms that react with the ethylenically unsaturated hydrocarbon radicals present in ingredient A and thereby cure the present composition, each molecule of ingredient B also contains at least one silicon-bonded alkoxysilylalkyl group. The repeating unit containing this group is represented by the formula

$$\begin{array}{c} R^2 \\ | \\ -SiO- \\ | \\ R^4SiOR3 \end{array}$$

where $R^2$, $R^3$ and $R^4$ are defined in the preceding portion of this specification.

The alkoxy group represented by $-OR^3$ includes but is not limited to one or more of methoxy, ethoxy, isopropoxy, and butoxy. $R^4$ is preferably ethylene, based on the availability of the reactants for preparing ingredient B.

In addition to at least one alkoxysilylalkyl group, it is essential that each molecule of ingredient B

contain at least 2 silicon-bonded hydrogen atoms in order for the present compositions to develop or form a network structure.

The organic groups bonded to the silicon atoms of ingredient B are selected from the same organic groups bonded to the silicon atoms of ingredient A, with the exception of ethylenically unsaturated hydrocarbon radicals. It should be understood that the organic groups bonded to the silicon atoms of ingredient B can be identical or different.

Ingredient B can be conveniently prepared by a hydrosilylation reaction between an alkenyl-substituted alkoxysilane and the organohydrogenpolysiloxane that will be used as ingredient B. Suitable organohydrogenpolysiloxanes include but are not limited to those typically used as crosslinkers or curing agents in organopolysiloxane compositions curable by a hydrosilylation reaction. The molecular structure of the organohydrogenpolysiloxane reactant can be straight chain, network, or three dimensional. This reactant can be a homopolymer copolymer, or it may be a mixture of two or more types of polymers. The degree of polymerization of the organohydrogenpolysiloxane reactant should typically correspond to a viscosity at 25 °C. within the range of 0.5 to 50,000 centipoise, preferably within the range of 1 to 10,000 centipoise.

Alkenyl-substituted alkoxysilanes that can be reacted to prepare ingredient B include but are not limited to vinyltrimethoxysilane, vinyltriethoxysilane and allyltrimethoxysilane.

The reaction between the alkenyl-substituted alkoxysilane and the organohydrogenpolysiloxane reactant is typically catalyzed using any of the known transition-metal catalysts which exhibit a hydrosilylation catalytic activity.

Preferred embodiments of ingredient B include but are not limited to the following compounds:

$$Me_3SiO(Me_2SiO)_m(\underset{CH_2CH_2Si(OR)_3}{\underset{|}{MeSiO}})_n(MeHSiO)_pSiMe_3 \quad ,$$

$$Si(OSiMe_2H)_3\{OSiMe_2CH_2CH_2Si(OR)_3\}, \quad \text{and}$$

$$\boxed{(MeHSiO)_q(\underset{CH2CH2Si(OR^3)_3}{\underset{|}{MeSiO}})_r}$$

In these formulae m n, and p represent integers with n > 1, p >2, q + r = 3 to 6 and q > 2

The concentration of ingredient B in the present curable compositions is equivalent to a molar ratio of silicon-bonded hydrogen atoms in this ingredient to vinyl or other ethylenically unsaturated hydrocarbon radicals in ingredient A of from 0.5:1 to 10:1, inclusive.

This range of molar ratios is typically equivalent to a concentration of ingredient B of from 0.1 to 10 weight parts per 100 weight parts of ingredient A.

Ingredient C of the present compositions is a microencapsulated hydrosilylation reaction catalyst that serves as a heat-activated catalyst for the curing reaction between the silicon-bonded alkenyl groups in ingredient A and the silicon-bonded hydrogen atoms in ingredient B.

One embodiment of the microencapsulated catalyst is characterized by a structure in which the hydrosilylation-reaction catalyst constitutes a core within a shell or skin of the thermoplastic resin. A second embodiment is characterized by a structure in which the catalyst is dissolved or dispersed within particles of a finely divided thermoplastic resin.

The hydrosilylation reaction catalyst may be any known transition-metal catalyst which exhibits catalytic activity in a hydrosilylation reaction. Specific catalysts include but are not limited to platinum-containing catalysts such as chloroplatinic acid, alcohol-modified chloroplatinic acid, platinum/olefin complexes, and finely divided platinum metal on various supports, including alumina, silica, and carbon black, and platinum black; palladium catalysts such as tetrakis(triphenylphosphine)-palladium; and rhodium-containing catalysts.

Among these various catalysts platinum/alkenylsiloxane complexes are preferred based on their high activity and compatibility with ingredients A and B. The alkenyl radical is preferably vinyl.

The catalyst is microencapsulated within a thermoplastic resin having a softening point in the range of 50 to 200 °C. The choice of a thermoplastic resin is not critical so long as is essentially impermeable to the hydrosilylation-reaction catalyst at least during the period of storage and is essentially insoluble in the

organopolysiloxane that constitutes ingredient A of the present compositions.

Suitable thermoplastic resins include but are not limited to acrylic resins, polystyrene, methylcelluloses, silicone resins, and polysilane resins.

Any of the known techniques for microencapsulating a material within a layer of thermoplastic resin can be used to prepare ingredient B. These techniques include but are not limited to chemical methods such as interfacial polymerization and in-situ polymerization and physical/mechanical methods such as coacervation and precipitation of the encapsulant in a solvent/non-solvent mixture by evaporation of the solvent portion of the mixture. Solvent evaporation is preferred among these techniques because it relatively easily yields microcapsules with a narrow particle size distribution.

The microcapsules generated by such methods can be directly used as ingredient C. It has been found that to ensure excellent storage stability in a curable composition containing the microencapsulated catalyst, it is advantageous to remove the hydrosilylation-reaction catalyst adhering at the surface of the catalyst-containing particles by washing the particles with a suitable solvent that will dissolve the catalyst but not the encapsulant. Suitable washing solvents include but are nor limited to alcohols such as methyl alcohol and ethyl alcohol and low-molecular-weight organopolysiloxanes such as hexamethyldisiloxane.

The average particle size of ingredient C is typically within the general range of from 0.1 to 500 micrometers, and preferably falls within the range of 0.3 to 100 micrometers. When the average particle size falls below 0.1 micrometer, the yield of hydrosilylation-reaction catalyst at the time of production will suffer a drastic decline. When the particle size exceeds 500 micrometers, the stability of a dispersion of ingredient C in ingredient A is reduced.

The relative amounts proportion of hydrosilylation-reaction catalyst and thermoplastic resin in ingredient C will vary widely depending on the method for manufacturing the this ingredient, and therefore cannot be rigidly specified. In most instances it is desirable that the hydrosilylation-reaction catalyst constitute at least 0.01% by weight of ingredient C. At concentrations below 0.01%, the proportion of thermoplastic resin in the final curable composition will become too large, and the post-cure properties of articles prepared using the present compositions will be adversely affected.

The concentration of ingredient C in the present compositions is expressed as parts by weight of platinum or other metal present in the catalyst portion of this ingredient. This value is typically within the range of from 0.000001 to 0.1 weight parts and preferably within the range of 0.00005 to 0.01 weight parts, of the metal, per 100 weight parts of ingredient A.

This range of metal concentration is typically equivalent to a range of from 0.005 to 100 weight parts for the concentration of ingredient C. This range may be exceeded, so long as the concentration of platinum or other metal is within the presently specified range.

Although the present compositions require the presence of ingredients A, B, and C, additional ingredients can be present so long as the objectives of the present invention are not compromised. These ingredients include but are not limited to microparticulate silicas such as fumed silica or wet-method silica; surface-hydrophobicized microparticulate silica; organohydrogenpolysiloxane having at least 2 silicon-bonded hydrogen atoms in each molecule, for the purpose of adjusting the molar ratio between the silicon-bonded hydrogen atoms in ingredient B and the silicon-bonded alkenyl radicals groups in ingredient A; crepe-hardening inhibitors; storage stabilizers such as phenylbutynol; non-organopolysiloxane polymers; heat stabilizers; flame retardants; quartz powder; diatomaceous earth; calcium carbonate; and glass fibers.

The present curable compositions can be prepared simply by mixing the aforementioned ingredients A, B and C, together with any optional ingredients, to form a homogeneous composition. While no specific restrictions are placed on the mixing sequence, a preferred method consists of mixing and dispersing ingredient C to homogeneity in a small quantity of ingredient A and then adding this to a mixture of the remaining portion of ingredient A and ingredient B.

Any means can be used to achieved thorough mixing of the ingredients, so long as it does not fracture or destroy the microencapsulated catalyst.

The temperature conditions during the mixing operation cannot be strictly specified because they vary with the softening point of the thermoplastic resin portion of ingredient C employed. It should be clear that the temperature must not exceed the softening point or melting point of the thermoplastic resin.

Because the present compositions exhibit an excellent storage stability in the vicinity of room temperature (20 to 50°C.), they can be stored or preserved for long periods of time as a single-package organopolysiloxane composition. Moreover, cured articles prepared using these compositions exhibit an excellent adhesion due to the presence of ingredient B without requiring additional adhesion promoters. The present compositions are therefore well qualified for use as potting and coating materials for electrical and electronic components or as an adhesive where such properties are critical.

The following examples describe preferred embodiments of the present compositions, particularly

ingredient B, and should not be interpreted as limiting the scope of the invention as defined in the accompanying claims. Unless otherwise specified all parts and percentages in the examples are by weight and viscosities are expressed in centipoise (cp) and were measured at 25° C.

Reference Example 1

Synthesis of a Platinum/Vinylsiloxane Complex

160 Grams of 1,3-divinyltetramethyldisiloxane were blended with 32.0 g of chloroplatinic acid ($H_2PtCl_6 \cdot 6H_2O$) and the resultant mixture was heated for 1 hour at 120° C. with stirring in a stream of nitrogen gas. The platinum black produced as a by-product was subsequently removed by filtration and the acid was then removed by washing with water to yield a reaction product containing a complex of platinum coordinated to 1,3-divinyltetramethyldisiloxane. The concentration of platinum metal in this reaction product was 4.25%.

Reference Example 2

Preparation of Polystyrene-Based Platinum Catalyst Microcapsules

8.0 Grams polystyrene exhibiting a softening point of 82° C. and 1.0 g of the platinum/vinylsiloxane complex catalyst prepared in Reference Example 1 were dissolved in 165 g methylene chloride. The resultant solution was added with stirring to water containing 7.5 g polyvinyl alcohol (Gosenol GL-05 from Nippon Gosei Kagaku Kogyo Kabushiki Kaisha). The methylene chloride was subsequently evaporated over a period 40 hours during which time the temperature of the solution ranged from 25 to 40° C. The suspended solid material was then separated by the liquid by centrifugation. This material was first washed with water followed by washing with a large quantity of methyl alcohol, and finally with hexamethyldisiloxane. The resultant particles of microencapsulated platinum catalyst exhibited an average diameter of 7 micrometers and a platinum content of 0.24%.

Reference Example 3

Preparation of a polymethyl methacrylate-encapsulated platinum catalyst

A microencapsulated platinum catalyst exhibiting an average particle diameter of 10 micrometers and a platinum content of 0.104% was prepared following the procedure described in Reference Example 2 with the exception of replacing the polystyrene with 8.0 g of polymethyl methacrylate exhibiting a softening point of 110° C. and an average molecular weight of 93,000).

Reference Example 4

Preparation of a Microencapsulated Platinum Catalyst Using a Silicone Resin

The following ingredients were dissolved in 330 g methylene chloride: 1.6 g platinum/vinylsiloxane complex catalyst as prepared as described in Reference Example 1 and 16.0 g silicone resin exhibiting a softening point of 90° C. and consisting essentially of 18 mole% diphenylsiloxane units, 17 mole% dimethylsiloxane units, and 65 mole% monophenylsiloxane units.

The solubilized resin was added with stirring to a large quantity of water containing 15 g polyvinyl alcohol available as Gosenol GL-05 from Nippon Gosei Kagaku Kogyo Kabushiki Kaisha. The methylene chloride was then evaporated over a period of 48 hours during which period the temperature of the solution ranged from 25 to 40° C. The microencapsulated catalyst, in the form of a suspended solid particles, was separated by centrifugation. This particles were washed with water and followed by a large quantity of methyl alcohol to yield a microencapsulated platinum catalyst exhibiting an average particle diameter of 1 micrometer and a platinum content of 0.40% platinum.

Reference Example 5

Preparation of a Microencapsulated Platinum Catalyst Using a Polysilane Resin

A microencapsulated platinum catalyst was prepared as described in Example 2, with the exception that the polystyrene resin was replaced with 8.0 g of a polyphenylmethylsilane resin exhibiting a softening point of 135 °C. The resultant particles of microencapsulated catalyst exhibited an average particle diameter of 10 micrometers and a platinum content of 0.27% .

Example 1

100 Parts of a dimethylvinyl-terminated dimethylpolysiloxane exhibiting a viscosity of approximately 2,000 cp) and 20 parts microparticulate silica exhibiting a specific surface area of 200$m^2$/g and which had previously been treated with hexamethyldisilazane were blended to homogeneity. To the resultant mixture were added 0.02 g 3,5-dimethyl-3-hexynol and 1.4 g siloxane (B-1) in the form of a 4 : 1 weight ratio mixture of the following compounds:

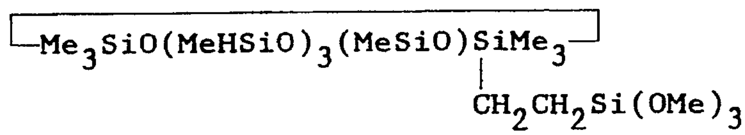

and

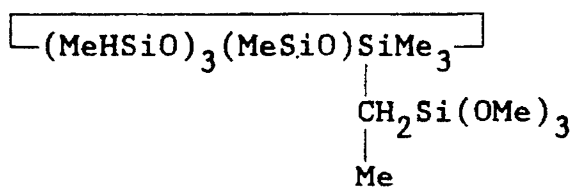

A heat curable organopolysiloxane composition of this invention was then prepared by the addition with mixing of an amount of the microencapsulated platinum catalyst prepared in Reference Example 4 sufficient to provide a platinum content in the composition of 5 ppm.

The resultant curable composition was then placed between two test panels of the same material selected from aluminum, copper, iron, nickel, Bakelite(R), epoxy glass, polybutylene terephthalate (PBT), or glass). The resultant composite was then cured in a drying oven for 1 hour at 120 °C. The adhesive strength of the composite was measured by lap shear testing, and results are reported in Table 1.

For comparison, measurements were carried out as above, but using 0.87 g of

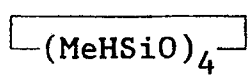

as the crosslinker in the curable composition.

Table 1

| Substrate | Adhesive Strength (kg/cm2) | |
|---|---|---|
| | Example 1 | Comparison |
| Example 1 | | |
| aluminum | 32 | < 5 |
| copper | 14 | < 5 |
| iron | 22 | < 5 |
| nickel | 12 | < 5 |
| Bakelite | 12 | < 5 |
| epoxy glass | 12 | < 5 |
| PBT | 12 | < 5 |
| glass | 30 | < 5 |

For comparative purposes a curable composition outside the scope of this invention was prepared using the same composition described in the preceding section of this example, with the exception that the microencapsulated platinum catalyst was replaced with an amount of the platinum/vinylsiloxane complex prepared as described in Reference Example 1 equivalent to a platinum content of 5 ppm. This composition was cured after 10 days at 25° C., while the curable composition the composition containing the microencapsulated platinum catalyst was not cured even after being stored for 90 days under same conditions.

Example 2

The following ingredients were blended to homogeneity: as ingredient A, 58 parts of a dimethylvinyl-terminated dimethylpolysiloxane exhibiting a viscosity of approximately 2,700 cp; as an additional vinyl-containing organopolysiloxane, 13 parts of a polysiloxane exhibiting a viscosity of approximately 10 centistokes and consisting essentially of trimethylsiloxy, dimethylvinylsiloxy and $SiO_2$ units; 17 parts of quartz powder with an average particle size of approximately 5 microns; and 12 parts of finely divided silica exhibiting a specific surface area of 200 $m^2/g$ wherein the surface of the particles had been hydrophobicized with by treating the silica with hexamethyldisilazane.

To the resultant composition were added with mixing to homogeneity 4.6 parts of an organohydrogenpolysiloxane (B-2) represented by the following average molecular formula

$$Me_3SiO(Me_2SiO)_3(MeSiO)(MeHSiO)_6SiMe_3 \quad ,$$
$$|$$
$$CH_2CH_2Si(OMe)_3$$

0.24 parts of the silicone resin-encapsulated platinum catalyst microcapsules as prepared as described in Reference Example 4, and 0.06 parts 3-phenyl-3-butynol.

The resultant curable composition of this invention was placed between two aluminum test panels, and the resultant composite was cured by heating it in a drying oven for 1 hour at 120° C. The adhesive strength and mode of adhesive failure (adhesive or cohesive) were measured using the procedure for lap shear testing.

The adhesive strength of the composite was 37 $kg/cm^2$ initially and 35 $kg/cm^2$ after 28 days at 50° C. The failure mode in both instances was cohesive failure.

To determine the effect of curing conditions on the mode of failure the same curable composition was placed inserted between two aluminum test panels. In this instance the resultant composite was cure by placing it in a heated hydraulic press for 10 minutes at a temperature of 150° C. The adhesion mode again corresponded to cohesive failure.

Examples 3 and 4

Curable compositions were prepared by using the organohydrogenpolysiloxane B-1 or B-2 described in the preceding examples in addition to an organohydrogenpolysiloxane outside the scope of the present invention and identified as D in Table 2. Ingredient D exhibited the formula

(D) $Me_3SiO(Me_2SiO)_3(MeHSiO)_5SiMe_3$.

For comparative purposes a curable composition outside the scope of this invention was prepared using ingredient D as the only organohydrogenpolysiloxane.

Each of the curable compositions was placed between two identical test panels formed from aluminum, brass, Bakelite, epoxy glass and glass. After curing the resultant composites by heating them for one hour in a drying oven maintained at a temperature of 120° C., the mode of adhesion failure was evaluated. The results are recorded in Table 2.

Table 2

| Crosslinker Example 2 | Example 3 | Example 4 | Comparison |
|---|---|---|---|
| (B-1) | 1.0 | | |
| (B-2) | | 3.2 | |
| (D) | 4.3 | 1.2 | 4.3 |
| **Substrate** | | | |
| aluminum | + | + | - |
| brass | + | + | - |
| Bakelite | + | + | - |
| Epoxy glass | + | + | - |
| glass | + | + | - |

+ = cohesive failure

- = interfacial failure (between substrate and cured composition)

As a demonstration of the storage stability exhibited by the present compositions, neither the composition of Example 3 nor the composition of Example 4 cured even after 60 days at 40° C.

Examples 5, 6, and 7

Curable compositions of this invention were prepared as described in Example 2, with the exception that the microencapsulated platinum catalyst of this example was replaced with the microencapsulated catalysts described in Reference Examples 2, 3, and 5. The concentration of catalyst in each composition was equivalent to 10 ppm of platinum.

Each of the curable compositions were placed between two aluminum test panels and then cured for 30 minutes in a drying oven maintained at 150° C. Each of the composites exhibited failure.

The storage stability of the compositions was demonstrated by the observation that none of the compositions cured during 90 days at 25° C.

## Claims

1. In a one-part curable organosiloxane curable by a platinum-catalyzed hydrosilylation reaction, said composition comprising
   (A) an organopolysiloxane containing at least two silicon-bonded alkenyl radicals in each molecule and represented by the average formula

$$R_aSiO_{(4-a)/2}$$

wherein R is a substituted or unsubstituted monovalent hydrocarbon group the value of a is from 1.0 to 2.3, inclusive.

(B) as the curing agent for said composition, an organohydrogenpolysiloxane containing at least 2 silicon-bonded hydrogen atoms per molecule,

and

(C) a hydrosilylation-reaction catalyst which is microencapsulated within a layer of a thermoplastic resin exhibiting a softening point of 50 to 200 °C., where said catalyst is selected from the group consisting of metals from the platinum group of the periodic table of the elements and compounds of said metals,

the improvement comprising the presence in said organohydrogenpolysiloxane of at least one unit represented by the formula

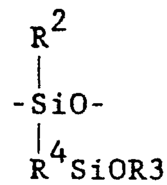

where $R^2$ is selected from the same group of hydrocarbon radicals as $R^1$, $R^3$ represents an alkyl radical, and $R^4$ represents an alkenyl radical containing at least two carbon atoms.

2. A curable composition according to claim 1 where $R^1$ and $R^2$ are individually selected from the group consisting of alkyl, alkenyl, aryl and halogenated alkyl radical, the viscosity of said organopolysiloxane is from 10 to 1,000,000 centipoise at 25 °C., $R^3$ is methyl, ethyl, isopropyl or butyl, and $R^4$ is ethylene , $R^4$ represents an ethylene radical and the concentration of said organohydrogenpolysiloxane is equivalent to a molar ratio of silicon-bonded hydrogen atoms in said organohydrogenpolysiloxane to alkenyl radicals in said organopolysiloxane of from 0.5:1 to 10:1.

3. A curable composition according to claim 2 where at least a portion of the radicals represented by $R^1$ and $R^2$ are methyl, said catalyst is platinum metal or a platinum compound and said thermoplastic resin is selected from the group consisting of silicone resins, polysilane resins, acrylic resins and polystyrene resins.

4. A curable composition according to claim 3 where the platinum compound is present as a complex with an alkenyl-substituted siloxane.